# EUROPÄISCHE PATENTANMELDUNG

(11) **EP 1 134 473 A1**
(43) Veröffentlichungstag der Anmeldung: **19.09.2001**
(21) Anmeldenummer: 01250034.4
(22) Anmeldetag: 31.01.2001
(51) Int. Cl.: F16L 13/14

(54) **Rohrpressverbindung**

(30) Priorität: 14.03.2000 DE 10013569
(71) Anmelder: Mapress GmbH & Co. KG, 40764 Langenfeld (DE)
(72) Erfinder: Berane, Michael, 40764 Langenfeld (DE)
(74) Vertreter: Meissner, Peter E., Dipl.-Ing.

(57) **Zusammenfassung**

Die Erfindung betrifft eine Rohrpressverbindung mit einem, im wesentlichen als zylindrische Innenhülse ausgebildeten metallischen Pressfittingelement, das einen Anschlag für ein aufzuschiebendes, dünnwandiges Leitungsrohr aufweist, wobei mittels eines mindestens zwei Pressbacken aufweisenden Presswerkzeuges nach dem Ansetzen und radialen Schließen eine unlösbare, dichte Rohrpressverbindung gebildet wird.

Erfindungsgemäß ist auf der Außenfläche des zylindrischen Abschnittes (2,2',15,15') des Pressfittingelementes (1,14) mindestens ein Zahnmittel (3-3") angeordnet und weist eine auf das Ende des Leitungsrohres (6) aufgeschobene Zentrierhülse (7,17) einen nach außen sich erstreckenden Kragen (8) auf, der bei der radialen Verpressung in eine in der Pressbacke (9,9') angeordnete Ausnehmung (12) eingreift.

## Beschreibung

Die Erfindung betrifft eine Rohrpressverbindung gemäß dem Oberbegriff des Patentanspruches 1.

Seit längerem gibt es Bestrebungen, unter Verzicht auf Schweißen, Löten oder Gewindeschneiden mit einer Verpresstechnik Rohre mittels eines Fittings miteinander zu verbinden. Dazu wird beispielhaft auf die DE-AS 11 87 870 verwiesen. Bei dieser bekannten Verpresstechnik weist der Pressfitting im Endbereich einen Ringwulst auf, in den ein gummielastischer Dichtring einlegbar ist. Das zu verbindende Rohr wird in den Pressfitting eingeschoben und der Pressfitting mittels eines zwei Pressbacken aufweisenden Presswerkzeuges auf das eingeschobene Rohr radial gedrückt. Dabei bildet der auf das Rohr gedrückte Dichtring die Dichtebene. Die mit einer Greifschneide versehene Stirnseite des Pressfittings wird ebenfalls beim Verpressen auf das eingeschobene Rohr gedrückt, so dass eine Sicke gebildet wird, die die axiale Sicherung gegen Herausdrücken des unter Innendruck stehenden Rohres bildet. In Weiterentwicklung dieses Konzeptes ist die Greifschneide weggefallen und stattdessen wird der an den Ringwulst sich anschließende zylindrisch ausgebildete Bereich auf das eingeschobene Rohr gedrückt (siehe hierzu beispielhaft Mapress, Trinkwasser-Installation mit Rohren und Rohrverbindungen aus nichtrostenden Stählen, 7/97).

Einen anderen Weg sind diejenigen Hersteller gegangen, die das sogenannte Lokring-System eingesetzt haben (siehe hierzu beispielhaft EP 0 048 003, US 5,114,191, Firmenprospekt Woeste, Pressfittings aus Edelstahl, März 1999). Bei diesem Verbindungssystem wird auf einen in etwa zylindrischen Kupplungskörper, der auf der Innen- oder Außenfläche mit mindestens einem Zahnelement versehen ist, ein Pressring axial aufgeschoben. Bei diesem Aufschieben graben sich die Zahnmittel in die Außen- bzw. Innenfläche des ein- oder aufgeschobenen Rohres ein und bilden in Doppelfunktion die Dichtebene und gleichzeitig die axiale Sicherung gegen Herausdrücken des Rohres.

Nachteilig beim Lokring-System ist, dass für die Verpressung ein völlig anderes Werkzeug erforderlich ist und zweitens erheblich mehr Platz benötigt wird, um den Pressring axial verschieben zu können.

Aufgabe der Erfindung ist es, für eine Rohrpressverbindung die Vorteile des Lokring-Systems zu nutzen, unter Verwendung der in großen Stückzahlen im Markt sich befindenden Presswerkzeuge für eine radiale Verpressung.

Diese Aufgabe wird ausgehend vom Oberbegriff in Verbindung mit den kennzeichnenden Merkmalen des Anspruches 1 und 6 gelöst. Vorteilhafte Weiterbildungen sind jeweils Gegenstand von Unteransprüchen.

Nach der Lehre der Erfindung ist auf der Außenfläche des zylindrischen Abschnittes des Pressfittingelementes mindestens ein Zahnmittel angeordnet. Eine auf das Rohrende aufgeschobene Zentrierhülse weist einen nach außen sich erstreckenden Kragen auf, der bei der radialen Verpressung in eine in der Pressbacke angeordnete Ausnehmung eingreift.

Nach einem weiteren Merkmal der Erfindung bilden mehrere im Abstand voneinander angeordnete Zahnmittel die Dichtebene und gleichzeitig die axiale Sicherung. Vorzugsweise sind alle Zahnmittel nach Art und Ausbildung gleich.

Nach einem weiteren Merkmal der Erfindung ist im Anfangsbereich des zylindrischen Abschnittes des Pressfittingelementes ein metallisches Dichtmittel angeordnet, während das Zahnmittel die Funktion der axialen Sicherung übernimmt. Vorzugsweise entspricht der äußere Durchmesser des Dichtmittels dem äußeren Durchmesser des Zahnmittels, wobei die Höhe des Zahnmittels beispielsweise 0,5 mm beträgt.

Bei einer anderen Lösungsvariante wird vorgeschlagen, statt auf der Außenfläche ein Zahnmittel eine Ausnehmung anzuordnen, die mit einem auf der Zentrierhülse angeordneten Steg indirekt über das dazwischenliegende Rohr zusammenwirkt. Zur Zentrierung weist die Zentrierhülse einen nach außen sich erstreckenden Kragen auf. Die Zentrierung kann man aber auch in der Weise erreichen, dass in beiden Endbereichen der Zentrierhülse je ein Kragen angeordnet ist und beim radialen Verpressen die Pressbacke zwischen den beiden Kragen zur Anlage kommt.

Der Vorteil der vorgeschlagenen Rohrpressverbindung ist darin zu sehen, dass das Pressfittingelement und die Zentrierhülse einfach herzustellen sind und die im Markt sich befindenden Presswerkzeuge für das Verpressen verwendet werden können. Außerdem ist im Vergleich zum Lokring-System kein zusätzlicher axialer Platzbedarf für das Ansetzen des Presswerkzeuges erforderlich.

Weitere Merkmale, Vorteile und Einzelheiten der Erfindung ergeben sich aus der nachfolgenden Beschreibung von in einer Zeichnung dargestellten Ausführungsbeispielen. Es zeigen:
- Figur 1: im Längsschnitt ein erstes Ausführungsbeispiel einer erfindungsgemäß ausgebildeten Rohrpressverbindung
- Figur 2: im Längsschnitt ein zweites Ausführungsbeispiel
- Figur 3: im Längsschnitt ein drittes Ausführungsbeispiel

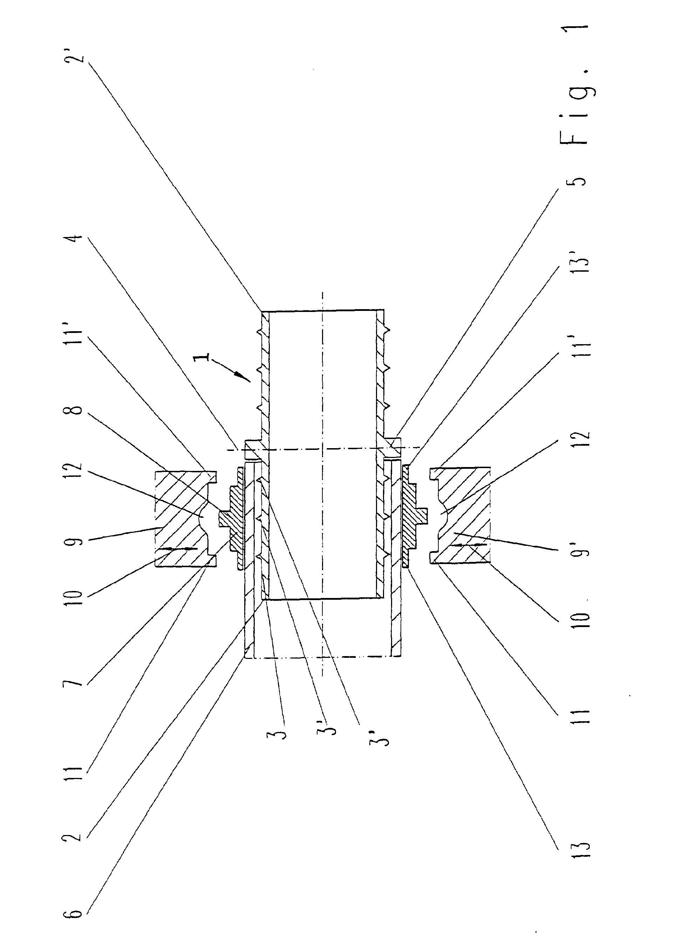

In Figur 1 ist in einem Längsschnitt ein erstes Ausführungsbeispiel einer erfindungsgemäß ausgebildeten Rohrpressverbindung dargestellt. Sie besteht aus einem als Innenhülse ausgebildeten Pressfittingelement 1. Dieses Pressfittingelement 1 kann alternativ zur Innenmuffe (wie hier dargestellt) auch Bestandteil eines Bogens, eines T-Stückes, eines Reduzierstückes oder dergleichen sein. In diesem Ausführungsbeispiel sind auf der Außenfläche des zylindrischen Abschnittes 2, 2' je drei Zahnmittel 3 - 3" angeordnet. In der vertikalen Symmetrieachse 4 des Pressfittingelementes 1 ist ein nach außen sich erstreckender Anschlag 5 vorgesehen, an dem das aufgeschobene Leitungsrohr 6 zur Anlage kommt. Auf dem Endbereich des Leitungsrohres 6 ist eine Zentrierhülse 7 aufgeschoben. Im Mittelbereich ist die Zentrierhülse 7 mit einem nach außen sich erstreckenden Kragen 8 versehen. Nach dem Aufschieben der Zentrierhülse 7 wird ein hier nicht näher dargestelltes Presswerkzeug angesetzt, das mindestens zwei Pressbacken 9,9' aufweist. Die eingezeichneten Doppelpfeile 10 sollen verdeutlichen, dass die Pressbacken 9,9' radial aufeinander zu bzw. voneinander weg bewegbar sind. Die Kontur jeder Pressbacke 9,9' weist zwei Pressstege 11, 11' und eine im mittleren Bereich angeordnete Ausnehmung 12 auf. In diese Ausnehmung 12 greift beim radialen Verpressen der Kragen 8 der Zentrierhülse 7 ein, so dass die Zentrierhülse 7 dadurch zentriert wird. Beim radialen Verpressen drücken die beiden Pressstege 11,11' auf die abgesetzten Endbereiche 13,13' der Zentrierhülse 7, so dass diese auf die Außenfläche des Leitungsrohres 6 gedrückt werden. Beim radialen Drücken des Leitungsrohres 6 graben sich die Zahnmittel 3 - 3" in die Innenfläche des Leitungsrohres 6 ein. Damit wird sowohl die Dichtebene als auch die axiale Sicherung gebildet.

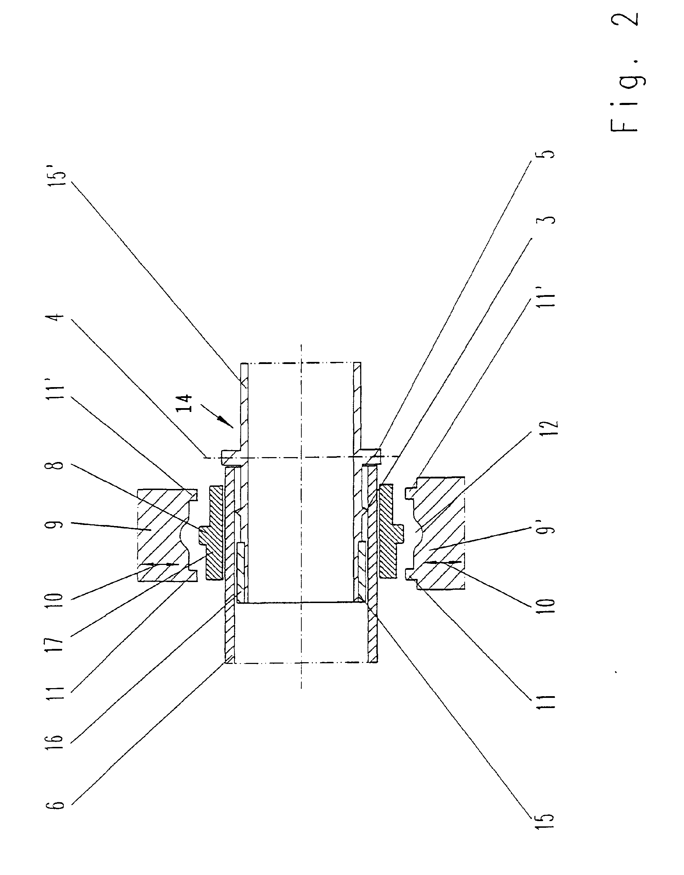

In Figur 2 ist in einem gleichen Längsschnitt ein zweites Ausführungsbeispiel dargestellt, wobei für gleiche Teile gleiche Bezugszeichen verwendet worden sind. Das Pressfittingelement 14 ist ebenfalls als Innenhülse ausgebildet. Im Unterschied zur ersten Ausführungsform ist auf dem zylindrischen Abschnitt 15, 15' nur ein Zahnmittel 3 vorgesehen. Zur Bildung der Dichtebene ist im stirnseitigen Bereich ein metallisches Dichtmittel 16, z. B. ein Ring aus Weichkupfer, angeordnet. Auf den Endbereich des Leitungsrohres 6 ist ebenfalls eine Zentrierhülse 17 aufgeschoben, die im mittleren Bereich mit einem nach außen sich erstreckenden Kragen 8 versehen ist, der mit der in der Pressbacke 9,9' angeordneten Ausnehmung 12 zentrierend zusammenwirkt. Beim radialen Verpressen drückt nur der hier rechts liegende Presssteg 11' der jeweiligen Pressbacke 9 bzw. 9' auf die Zentrierhülse 17, so dass sich das Zahnmittel 3 in die Innenfläche des Leitungsrohres 6 eingräbt und damit die axiale Sicherung bildet. Die Ausnehmung 12 der jeweiligen Pressbacke 9, 9' drückt über den Kragen 8 die Zentrierhülse 17 auf die Außenfläche des Leitungsrohres 6 und somit auf das Dichtmittel 16. Diese Kontaktierung bildet dann die Dichtebene. Für die Verpressung hat sich als günstig herausgestellt, wenn der äußere Durchmesser des Dichtmittels 6 dem äußeren Durchmesser des Zahnmittels 3 entspricht. Die Höhe des Zahnmittels 3 beträgt beispielsweise 0,5 mm.

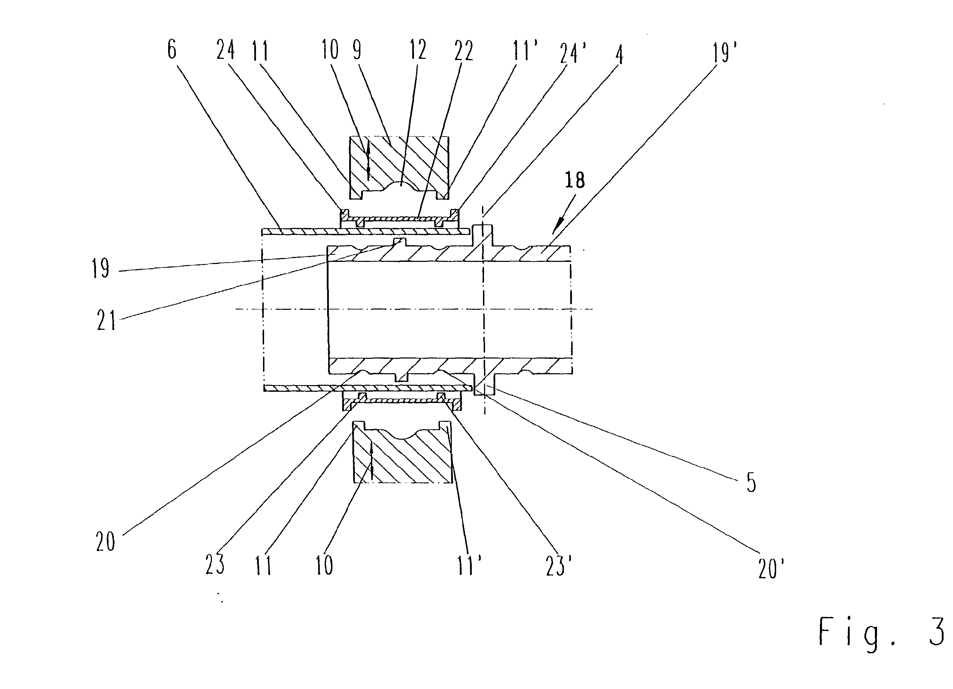

In Figur 3 ist ein drittes Ausführungsbeispiel dargestellt, wobei ebenfalls für gleiche Teile gleiche Bezugszeichen verwendet worden sind. In diesem Ausführungsbeispiel weist der zylindrische Abschnitt 19,19' des Pressfittingelementes 18 auf der Außenfläche zwei nutenförmige Ausnehmungen 20, 20' auf, die im Abstand zueinander angeordnet sind. Zwischen den beiden Ausnehmungen 20, 20' ist ein nach außen sich erstreckender Steg 21 vorgesehen. Auf den Endbereich des Leitungsrohres 6 ist eine Zentrierhülse 22 aufgeschoben, die auf der Innenfläche mit zwei Stegen 23, 23' versehen ist, die mit den Ausnehmungen 20, 20' auf dem Pressfittingelement 18 indirekt zusammenwirken. In den beiden Endbereichen der Zentrierhülse 22 ist je ein nach außen sich erstreckender Kragen 24, 24' vorgesehen, zwischen dem die jeweilige Pressbacke 9,9' beim radialen Verpressen zentrierend zur Anlage kommt. Beim Verpressen drücken die beiden Pressstege 11,11' der Pressbacke 9,9' auf die Endbereiche der Zentrierhülse 22 und damit die Stege 23,23' auf die Außenfläche des Leitungsrohres 6. Infolge der Ausnehmungen 20,20' auf dem Pressfittingelement 18 wird ein Teil des Leitungsrohres 6 in diese Ausnehmungen gedrückt und bildet damit die axiale Sicherung. Die Dichtebene wird durch das Aufdrücken des mittleren Bereiches des aufgeschobenen Leitungsrohres 6 auf den nach außen sich erstreckenden Steg 21 gebildet.

## Patentansprüche

1. Rohrpressverbindung mit einem, im wesentlichen als zylindrische Innenhülse ausgebildeten metallischen Pressfittingelement, das einen Anschlag für ein aufzuschiebendes, dünnwandiges metallisches Leitungsrohr aufweist, wobei mittels eines mindestens zwei Pressbacken aufweisenden Presswerkzeuges nach dem Ansetzen und radialen Schließen eine unlösbare, dichte Rohrpressverbindung gebildet wird,
**dadurch gekennzeichnet,**
**dass** auf der Außenfläche des zylindrischen Abschnittes (2,2', 15,15') des Pressfittingelementes (1,14) mindestens ein Zahnmittel (3-3") angeordnet ist und eine auf das Ende des Leitungsrohres (6) aufgeschobene metallische Zentrierhülse (7,17) einen nach außen sich erstreckenden Kragen (8) aufweist, der bei der radialen Verpressung in eine in der Pressbacke (9,9') angeordnete Ausnehmung (12) eingreift.

2. Rohrpressverbindung nach Anspruch 1,
**dadurch gekennzeichnet,**
**dass** drei im Abstand voneinander angeordnete Zahnmittel (3-3") auf der Außenfläche des zylindrischen Abschnittes (2,2') des Pressfittingelementes (1) vorgesehen sind.

3. Rohrpressverbindung nach Anspruch 1 und 2,
**dadurch gekennzeichnet,**
**dass** alle Zahnmittel (3-3") nach Art und Ausbildung gleich sind.

4. Rohrpressverbindung nach Anspruch 1,
**dadurch gekennzeichnet,**
**dass** im Anfangsbereich des zylindrischen Abschnittes (15,15') des Pressfittingelementes (14) ein metallisches Dichtmittel (16) angeordnet ist.

5. Rohrpressverbindung nach einem der Ansprüche 1 - 4,
**dadurch gekennzeichnet,**
**dass** die Zentrierhülse (7,17) sich nahezu über die Länge des zylindrischen Abschnitts (2,2',15,15') des Pressfittingelementes (1,14) erstreckt.

6. Rohrpressverbindung nach einem der Ansprüche 1 - 5,
**dadurch gekennzeichnet,**
**dass** der äußere Durchmesser des Dichtmittels (16) dem äußeren Durchmesser des Zahnmittels (3) entspricht.

7. Rohrpressverbindung nach Anspruch 6,
**dadurch gekennzeichnet,**
**dass** die Höhe des Zahnmittels (3) 0,5 mm ist.

8. Rohrpressverbindung mit einem im wesentlichen zylindrisch ausgebildeten metallischen Pressfittingelement, das einen Anschlag für ein aufzuschiebendes, dünnwandiges metallisches Leitungsrohr aufweist, wobei mittels eines mindestens zwei Pressbacken aufweisenden Presswerkzeuges nach dem Ansetzen und radialen Schließen eine unlösbare, dichte Rohrpressverbindung gebildet wird,
**dadurch gekennzeichnet,**
**dass** auf der Außenfläche des zylindrischen Abschnitts (19,19') des Pressfittingelementes (18) mindestens eine Ausnehmung (20,20') angeordnet ist und eine auf das Rohrende aufgeschobene metallische Zentrierhülse (22) auf der Außenfläche mindestens einen nach außen sich erstreckenden Kragen (24,24') und auf der Innenfläche mindestens einen nach innen sich erstreckenden Steg (23,23') aufweist, der mit der auf der Außenfläche des zylindrischen Abschnittes (19,19') des Pressfittingelementes (18) angeordneten Ausnehmung (20,20') indirekt zusammenwirkt.

9. Rohrpressverbindung nach Anspruch 8,
**dadurch gekennzeichnet,**
**dass** die Außenfläche des zylindrischen Abschnittes (19,19') des Pressfittingelementes (18) zwei im Abstand voneinander angeordnete Ausnehmungen (20,20') aufweist, die mit auf der Innenfläche der Zentrierhülse (22) angeordneten Stegen (23,23') indirekt zusammenwirken.

10. Rohrpressverbindung nach Anspruch 9,
**dadurch gekennzeichnet,**
**dass** zwischen den beiden Ausnehmungen (20,20') auf der Außenfläche ein nach außen sich erstreckender Steg (21) angeordnet ist.

11. Rohrpressverbindung nach den Ansprüchen 8 - 10,
**dadurch gekennzeichnet,**
**dass** in beiden Endbereichen der Zentrierhülse (22) je ein Kragen (24,24') angeordnet ist und die Pressbacke (9,9') zentrierend zwischen beiden Kragen (24,24') bei der radialen Verpressung zur Anlage kommt.
